# EUROPÄISCHE PATENTSCHRIFT

(11) **EP 0 854 782 B1**
(45) Veröffentlichungstag und Bekanntmachung des Hinweises auf die Patenterteilung: **22.03.2000**
(21) Anmeldenummer: 96930145.6
(22) Anmeldetag: 31.08.1996
(51) Int. Cl.: B29C 59/12, H01T 19/00

(54) **VORRICHTUNG ZUR BEHANDLUNG FLÄCHIGER SUBSTRATE MIT EINER KORONASTATION**
DEVICE FOR TREATING FLAT SUBSTRATES BY A CORONA STATION
DISPOSITIF DE TRAITEMENT DE SUBSTRATS PLATS AVEC UNE STATION A DECHARGES CORONA

(30) Priorität: 13.10.1995 DE 19538176
(43) Veröffentlichungstag der Anmeldung: 29.07.1998
(73) Patentinhaber: Arcotec Oberflächentechnik Gmbh, 71297 Mönsheim (DE)
(72) Erfinder: BLOSS, Fritz, D-71297 Mönsheim (DE)
(74) Vertreter: Kinkelin, Ulrich, Dipl.-Ing.
(86) Internationale Anmeldenummer: EP9603833
(87) Internationale Veröffentlichungsnummer: WO9714546

(56) Entgegenhaltungen:
- DE-C- 3 622 737
- DE-C- 4 212 549
- FR-A- 1 365 106
- GB-A- 2 086 144
- PATENT ABSTRACTS OF JAPAN vol. 018, no. 228 (P-1730), 25.April 1994 & JP,A,06 019246 (CANON INC), 28.Januar 1994,
- PATENT ABSTRACTS OF JAPAN vol. 008, no. 071 (C-217), 3.April 1984 & JP,A,58 225133 (TOYO BOSEKI KK), 27.Dezember 1983,

## Beschreibung

Vorrichtungen zur ein- oder auch doppelseitigen Behandlung von flächigen Substraten, beispielsweise Endlosfolien oder Bogenware aus Plastik, Papier, Metall etc. umfassen häufig Koronastationen.

Koronastationen zur Behandlung dieser Substrate bestehen aus wenigstens einer an eine Hochspannungsversorgung angeschlossen Elektrode und wenigstens einer Gegenelektrode, die im allgemeinen geerdet ist. Meist werden mehrere Elektroden und eine Gegenelektrode verwendet. Das zu behandelnde Substrat wird zwischen den an die Hochspannungsversorgung angeschlossenen Elektroden und der geerdeten Gegenelektrode entlanggeführt, wobei es an der Gegenelektrode im allgemeinen anliegt. Das Substrat liegt somit in der Funkenstrecke.

Die Elektroden (im nachfolgenden wird unter "Elektrode" immer die an die Hochspannung angeschlossene Elektrode verstanden), die stromführenden Kabel der Elektroden und die Isolatoren sind im wesentlichen von einer Gehäusevorrichtung umgeben, um das Bedienpersonal vor der Hochspannung zu schützen und auch Beschädigungen der Elektroden, Kabel und Isolatoren zu verhindern. Häufig sind die Gehäusevorrichtungen im wesentlichen quaderförmige Kammern, wobei sich die Elektroden an einer Seite der Kammer und an einer benachbarten oder auf der gegenüberliegenden Seite der Elektroden der Anschluß für die Hochspannungsversorgung befindet.

Bei der Koronaentladung werden die Elektroden heiß, so daß die Koronastationen üblicherweise Einrichtungen zur Erzeugung von Gasströmungen umfassen, die dafür sorgen, daß Luft oder ein anderes Gasgemisch an den Elektroden entlanggeführt wird.

Diese Einrichtungen dienen ebenfalls dazu, daß das durch die Koronaentladung entstandene Ozon aus der Umgebungsluft entfernt wird. Diese Einrichtungen sind Absaugvorrichtungen, die an der Kammer angeschlossen sind. Durch sie wird Luft oder ein anderes Gasgemisch in den Raum, in dem die Koronaentladung stattfindet, an den Elektroden vorbei durch die Kammer zur Absaugöffnung gesaugt, wodurch die Elektroden gekühlt werden und das bei der Koronaentladung entstandene Ozon sowie andere ggfs. vorhandene Bestandteile in der Luft abgesaugt werden.

Bei diesen bekannten Vorrichtungen kommt es früher oder später zu Defekten wie Kurzschluß, Verbrennung oder Zerstörung der Isolatoren in der Koronastation. Diese Defekte treten, je nach elektrischer Belastung und Schmutzbelastung, in einem Zeitraum von einigen Monaten bis zu zwei Jahren nach der Installation auf. Sie sind im wesentlichen darauf zurückzuführen, daß Schmutz, Lösemittel, Staub, Fasern, Klebstoffreste etc. in die Kammer hineintransportiert werden, die sich dort teilweise absetzen und die Elektroden, Anschlußmittel, Isolatoren etc. zerstören. Diese Defekte führen zu erheblichen Produktionsausfällen, da dann beispielsweise die gesamten Druckmaschinenstraßen stillstehen.

Da der wesentliche Teil der Verschmutzung von dem zu behandelnden Substrat, der "Bahn", herrührt, werden spezielle Bahnreinigungsvorrichtungen vorgeschaltet, um die Verschmutzungseffekte und die dadurch auftretenden Defekte zu verhindern. Trotz Verwendung dieser zusätzlichen Reinigungsvorrichtungen, die ja auch zusätzliche Kosten verursachen, können die obigen Defekte nicht verhindert werden, da die Teile in der Gehäusevorrichtung durch die Raumluft und die Restverschmutzung auf dem Substrat dennoch verschmutzen.

Aus der EP-0 524 415 A2 ist eine Vorrichtung zum Entfernen von Staubpartikeln auf Materialbahnen bekannt, die zwei parallel zueinander verlaufende, stabförmige, an entgegengesetztem Potential angeschlossene Sprühelektroden, zwischen denen die Materialbahn hindurchläuft, ohne die Sprühelektroden zu berühren, aufweist. Dabei werden die Staubpartikel so stark aufgeladen, daß sie leicht von der Materialbahn gelöst und abgesaugt werden. Dafür sind links und rechts der Sprühelektroden Luftabsaugkanäle vorgesehen, um die abgelösten Partikel von der Materialbahn abzusaugen. Aufgrund der schwebenden Durchführung der Materialbahn zwischen den Sprühelektroden und der gleichzeitig wirkenden Luftströme kann ein gleichmäßiges Ablösen und Absaugen der Schmutzpartikel von der Materialbahn durch Schwankungen der Materialbahn in ihrem Verlauf nicht gewährleistet sein.

Aus der DE 42 12 549 C1 ist eine Vorrichtung zur elektrischen Vorbehandlung von flächigen Substraten bekanntgeworden, welche eine Koronastation aufweist. In einem Gehäuse sind mehrere Elektroden angeordnet, die einer Gegenelektrode ' gegenüberliegen. Das Gehäuse weist ein inneres Gehäuse mit einer Düsenanordnung auf, welches die Elektroden aufnimmt. Über dieses innere Gehäuse wird ein Gas an der Elektrodenanordnung vorbei auf die Folie zugeführt und durch eine Absaugvorrichtung wieder abgesaugt. Die Absaugvorrichtung ist durch einen links und rechts der Düsenanordnung vorgesehenen Kanal ausgebildet, der ein Teil des Gehäuses ist. Die zur Gegenelektrode weisende Gehäuseform ist auf den Durchmesser der Gegenekektrode angepaßt und starr ausgebildet. Dadurch kann diese Koronastation ausschließlich mit einer auf die Gehäuseform angepaßte Gegenelektrode betrieben werden.

Der Erfindung liegt die Aufgabe zugrunde, eine Vorrichtung zu schaffen, die einen flexiblen Einsatz ermöglicht und ein sicheres Ablösen und Absaugen der Schmutzpartikel von der Materialbahn gewährleistet.

Diese Aufgabe wird durch den kennzeichnenden Teil des Anspruchs 1 gelöst.

In der Vorrichtung strömt saubere Luft oder auch ein anderes Gas oder Gasgemisch aus dem Innern der Gehäusevorrichtung an der zu kühlenden Elektrode vorbei zunächst in Richtung Gegenelektrode und wird dann in dem Raum, in dem die Koronaentladung stattfindet (Koronaraum), nach außen über die Absaugvorrichtung abgeführt, so daß die sich in der Gehäusevorrichtung befindlichen Teile nicht mehr durch den von dem zu behandelnden Substrat abgesaugten Schmutz verunreinigt und die zu kühlenden Elektroden nicht mehr mit schmutzbeladener Luft oder einem sonstigen schmutzbeladenen Gasgemisch umspült werden. Dadurch kann erzielt werden, daß ein hoher Reingungsgrad, eine effektive Ozonabsaugung gegeben sein kann.

Durch die an einen Bahnverlauf des Substrats einstellbare Absaugvorrichtung können günstige Strömungsbedingungen gegeben sein. Ein auf das flächige Substrat treffender Luftstrom wird seitlich abgelenkt und kann in direkter geradliniger Zuströmung in die Absaugvorrichtung einströmen. Dadurch sind Turbulenzen weitgehend ausgeschlossen, so daß auch die mitgeführten Partikel bzw. der abgesaugte Schmutz mit einem hohen Wirkungsgrad abgesaugt werden kann, ohne daß dieser sich an angrenzenden Teilen anlagert, was durch Turbulenzen hervorgerufen sein könnte.

Zur Vereinfachung wird für die nachfolgenden Beschreibung definiert, daß unter Luft zusätzlich auch ein Gas, insbesondere ein Inertgas wie Stickstoff, Helium etc. oder auch Gemisch von Gasen zu verstehen ist.

Durch die Weiterbildung gemäß Anspruch 4 wird erreicht, daß die Gasströmung aus dem Koronaraum seitlich abgesaugt wird. Die wenigstens eine Eintrittsöffnung der Absaugvorrichtung und die Längsachse der Elektrode sollten bei dieser Anordnung zueinander im wesentlichen parallel ausgerichtet sein. Die Gasströmung strömt also an der Elektrode vorbei zunächst im wesentlichen in Richtung Gegenelektrode und dann im wesentlichen in Richtung der wenigstens einen Eintrittsöffnung der Absaugvorrichtung. Da die Luft durch den Koronaraum strömt, werden die Gase und Verschmutzungen bildenden Teilchen mit fortgerissen und durch die wenigstens eine Eintrittsöffnung abgesaugt. Es ist jedoch ebenfalls möglich, die Eintrittsöffnung der Absaugvorrichtungen ober- und/oder unterhalb des Koronaraumes anzuordnen, also im wesentlichen senkrecht zur Längsachse der Elektrode. Natürlich kann eine Vorrichtung auch mehrere Absaugvorrichtungen, die seitlich und/oder ober- und/oder unterhalb des Koronaraumes angeordnet sein können, umfassen.

Durch den durch die Eintrittsöffnung der Absaugvorrichtung erzeugten Unterdruck wird überdies der Schmutz, der sich auf dem flächigen Substrat befindet, von der Gasströmung mitgerissen und ebenfalls durch die Eintrittsöffnung abgesaugt. Hierdurch wird eine Reinigung der Substratoberfläche erreicht, ohne daß hierfür spezielle kostenintensive Bahnreinigungsvorrichtungen notwendig wären.

Natürlich muß die Eintrittsöffnung der Absaugvorrichtung so angeordnet sein, daß sie den Schmutz nicht an den Elektroden vorbei in Richtung der sich in der Gehäusevorrichtung befindlichen Anschlußmittel saugen. Dies wird dadurch verhindert, daß sich die Eintrittsöffnungen seitlich des Koronaraumes oder seitlich des Koronaraumes mit einer Verschiebung in Richtung der Gegenelektrode befinden. Weitere vorteilhafte Ausgestaltungen der Eintrittsöffnung der Absaugvorrichtung, die eine effektive Kühlung der Elektrode sowie eine effektive Ozon- und Schmutzabsaugung bewirken, ergeben sich aus den Ansprüchen 5 und 6.

Eine besonders gleichmäßige und effektive Absaugung über die Längsausdehnung des Koronaraumes kann gemäß Anspruch 7 erreicht werden, wenn die Richtung, in die das Gas oder Teilchengemisch in die Eintrittsöffnung der Absaugvorrichtung einströmt und die Richtung, in die das Gas oder Teilchengemisch aus der Absaugvorrichtung wieder ausströmt, im wesentlichen senkrecht zueinander stehen. Dies hat sich insbesondere bei Absaugvorrichtungen bewährt, deren Eintritts- und Austrittsöffnungen in ihrer Form und Ausdehnung unterschiedlich sind, wie es beispielsweise bei einem länglichen Eintrittsspalt und einer runden Austrittsöffnung der Fall ist.

Damit die Effektivität der Absaugung und die Justage der Eintrittsöffnungen der Absaugvorrichtung der Dicke und dem Ort des Substrats, der Ausrichtung und Art der Elektrode, dem Abstand Elektrode-Gegenelektrode, der Schmutzbelastung des Substrats, der Ozonkonzentration etc. angepaßt werden kann, hat es sich gemäß Anspruch 8 als vorteilhaft erwiesen, daß die Größe und/oder der Ort der Eintrittsöffnung wenigstens teilweise einstellbar sind.

Absaugvorrichtungen können gemäß Anspruch 9 und 10 an beiden Seiten des Koronaraumes angeordnet sein. Die erwünschte Kühlung der Elektroden sowie die Schmutzabsaugung werden bei beiden Anordnungen erreicht. Besonders gute Ergebnisse bezüglich der Ozonabsaugung werden bei der sich an der Austrittsseite befindlichen Absauganlage erzielt, da hier eine effektive Entfernung der an dem Substrat anhaftenden laminaren ozonhaltigen Luftschicht möglich ist.

Eine Verstärkung des Absaugeffekts wird gemäß Anspruch 11 dadurch erreicht, daß zwei Absaugvorrichtungen vorgesehen sind, welche vorteilhafterweise gemäß Anspruch 13 an der Eintritts- und der Austrittsseite des Substrats aus dem Koronaraum vorgesehen sind. Sind zwei beidseitig des Koronaraumes angeordnete Absaugvorrichtungen vorgesehen, deren Eintrittsöffnung und Ort einstellbar ist, so kann die Eintrittsöffnung an der Austrittsseite des Substrats auf die Ozonabsaugung optimiert und an der Eintrittsseite des Substrats auf maximale Schmutzabsaugung von der Substratoberfläche eingestellt werden.

Mit dieser besonders bevorzugten Ausführungsform der beiden beidseitig angeordneten Absaugvorrichtungen wird eine hervorragende Ozon- und Staubabsaugung und eine sehr wirksame Kühlung der Elektrode(n) erreicht.

Gemäß Anspruch 13 sollte an der Gehäusevorrichtung eine Zuführvorrichtung für Gase, Luft oder Gasgemische vorhanden sein, so daß verhindert wird, daß mit der Absaugvorrichtung vorzugsweise die Raumluft abgesaugt und die gewünschte Kühlung der Elektroden verhindert wird. Die Zuführvorrichtung sollte eine in die Gehäusevorrichtung führende Eintrittsöffnung aufweisen, so daß die gewünschte Strömung aus dem Bereich der Anschlußmittel der Elektrode in der Gehäusevorrichtung in Richtung der Elektrode und anschließend zur Absaugvorrichtung stattfinden kann.

Um Verunreinigungen in der Gehäusevorrichtung zu verhindern, sollte die Zuführvorrichtung und/oder die Gehäusevorrichtung gemäß Anspruch 14 mit Filtermitteln versehen sein, insbesondere, wenn es sich bei dem verwendeten Gasgemisch um die Umgebungsluft handelt. Die Filtermittel können beispielsweise aus Papier, Aktivkohle oder dergleichen sein und sollten auf einfache Weise auswechselbar sein. Wird die Umgebungsluft durch die Gehäusevorrichtung geleitet, so ist es ausreichend, als Zuführvorrichtung einen Stutzen zu verwenden, der ggfs. die erforderlichen Filtermittel aufweist. Zur Regelung des Strömungsflusses ist es vorteilhaft, gemäß Anspruch 15 in ihrer Größe einstellbare Zuführöffnungen vorzusehen.

Eine weitere Ausgestaltung der Erfindung sieht gemäß Anspruch 16 vor, daß an der Zuführvorrichtung eine Vorrichtung zur Erzeugung von Gasströmung vorgesehen ist. Die Gasströmung kann beispielsweise dadurch erzielt werden, daß der Gasdruck in der Zuführvorrichtung höher als der Gasdruck beispielsweise in der Gehäusevorrichtung im Bereich der Anschlußmitte ist.

Um zu verhindern, daß die in die Gehäusevorrichtung eintretende Luft den "direkten Weg" von der Eintrittsöffnung in die Gehäusevorrichtung zur Eintrittsöffnung der Absaugvorrichtung nimmt, wodurch die erwünschte Kühlung der Elektrode vermindert werden würde, sind in der Gehäusevorrichtung gemäß Anspruch 17 vorzugsweise Mittel zum Lenken der Gasströmung vorgesehen, die bewirken, daß die Elektrode bzw. die Elektroden alle im wesentlichen gleichmäßig von der Luftströmung umspült und somit gekühlt werden.

Besonders bevorzugte Ausführungsformen, die die Vorteile der Absaug- und der Zuführvorrichtungen miteinander vereinen, ergeben sich aus den Ansprüchen 18 und 19.

Durch die bevorzugte Ausführungsform gemäß den Ansprüchen 20 und 21 kann die Luftströmung im einzelnen gesteuert und gelenkt werden. Dazu können Führungsleitbleche vorgesehen sein, die einen Teiluftstrom zu jeder oder zu zwei oder mehreren nebeneinander angeordneten Elektroden führen.

Bevorzugte Weiterbildungen der Vorrichtung ergeben sich aus den Ansprüchen 20 bis 23. Der minimale, zwischen den Oberflächen von Elektrode und Gegenelektrode gemessene Abstand sollte höchstens 5 mm betragen, vorzugsweise sind es etwa 2 mm.

Es ist ebenfalls möglich, die Vorrichtung in einer explosionsgeschützten Ausführung gemäß Anspruch 24 bereitzustellen.

Eine weitere bevorzugte Ausgestaltung sieht gemäß Anspruch 25 vor, daß der Gasstrom einen Kreislauf bildet. Dies kann dadurch erreicht werden, daß die Austrittsöffnung der Absaugvorrichtung mit der Eintrittsöffnung der Zuführöffnung verbunden ist, beispielsweise mittels einer Gasleitung. In einem solchen Gaskreislauf sollten Filtermittel und ggfs. eine Kühlung vorgesehen sein. Filtermittel können beispielsweise Aktivkohle oder auch Katalysatoren wie beispielsweise palladiumhaltige Katalysatoren sein, die dazu dienen, das gebildete Ozon zu adsorbieren und/oder zu zersetzen, so daß verhindert wird, daß das reaktive Ozon die Anschlußmittel der Elektroden, die Isolation oder die Elektroden schädigen kann. In Abhängigkeit von der Temperatur der Elektroden, der Anzahl der Elektroden, dem verwendeten Gasvolumen etc. kann es ebenfalls vorteilhaft sein, das in dem Kreislauf der Gehäusevorrichtung wieder zugeführte Gasgemisch zu kühlen, beispielsweise mittels eines Wärmeaustauschers, damit sich die Effektivität der Gaskühlung der Elektroden nicht mit der Zeit infolge der Erwärmung des Gasgemisches vermindert.

Die Vorrichtung ist außer für flächige Substrate auch für fadenartige Substrate einsetzbar. Prinzipiell können alle möglichen Substrate verwendet werden, deren Dicke etwas geringer als der Abstand zwischen der bzw. den Elektroden und der Gegenelektrode ist, so daß sie zwischen diesen hindurchgeführt werden können. Das Substrat muß nicht notwendigerweise auf der Gegenelektrode anliegen. Es kann auch zwischen Elektrode und Gegenelektrode hindurchgeführt werden, ohne daß es an der Gegenelektrode und natürlich auch nicht an der heißen Elektrode anliegt.

Die Erfindung ist nicht auf die Verwendung bestimmter Elektroden und Gegenelektroden beschränkt. Als (Gegen)elektrode können sowohl Keramik- als auch Metallelektroden verwendet werden. Die (Gegen)elekroden können sowohl zylindrisch als auch quaderförmig oder auch anders geformt sein.

Die Vorrichtung kann durch zusätzliche lonisatoren und/oder Bürsten und/oder Absaug- und/oder Blasvorrichtungen - beispielsweise an der Eintrittsseite des Substrats - zu einer kombinierten Korona-Bahnreinigungsvorrichtung aufgerüstet werden. Eine solche Korona-Bahnreinigungsvorrichtung weist die erfindungsgemäßen Vorteile auf und ist zudem gegenüber den bekannten Koronastationen und Bahnreinigungsanlagen auch kostengünstiger.

Natürlich kann die Vorrichtung auch mit anderen Bahnbehandlungsvorrichtungen wie Bürsten und zusätzlichen Walzen als auch Blasvorrichtungen aufgerüstet werden.

Die Vorrichtung kann natürlich auch für eine doppelseitige Behandlung des Substrats verwendet werden.

Es hat sich gezeigt, daß durch die erfindungsgemäße Vorrichtung mit der neuen Luftführung auch bessere Ergebnisse bei der Behandlung des Substrats erzielt werden. Dies ist darauf zurückzuführen, daß die reaktiven Spezies wie Ozon, die sich durch die Koronaentladung im Koronaraum bilden, bei der neuen Luftführung an dem Substrat entlangströmen, und nicht, wie es bei den bekannten Vorrichtungen der Fall ist, quasi sofort nach dem Entstehen von dem Substrat abgesaugt werden.

Die Strömungsrichtung entlang dem Substrat und der/den heißen Elektrode(n) trägt zusätzlich dazu bei, daß sich die reaktiven Spezies zersetzen.

Es wird ebenfalls ein Verfahren angegeben, das Beschädigungen am Substrat und der Elektrode bzw. den Elektroden bei nachlassender Spannung der Substratbahn verhindert. Läßt die Spannung, mit der das Substrat an der Gegenelektrode entlanggeführt ist, nach, beispielsweise beim Stillstand der Vorrichtung, so wird die Substratbahn durch den Sog gegen die heiße Elektrode gesogen. Ist die Gegenelektrode überdies oberhalb der Elektrode angeordnet, so verstärkt die Gravitation diesen unerwünschten Effekt zusätzlich. Das Substrat klebt infolge seiner häufig thermoplastischen Eigenschaften an der heißen Elektrode fest, es wird angeschmolzen oder zersetzt sich sogar an der Elektrode, wodurch Substrat und Elektrode beschädigt werden. Häufig kommt es zur Verkohlung der Elektrodenstäbe, wodurch eine erhebliche Verschmutzung gegeben ist.

Durch die neue Luftführung werden die Substratbahnen bei nachlassender Spannung des Substrats nicht mehr in Richtung der heißen Elektrode gesogen, sondern gegen die Gegenelektrode bzw. Trägerwalze gedrückt, die relativ kühl ist, wodurch obige Beschädigungen vermieden werden.

Weitere vorteilhafte Ausgestaltungen und Vorteile von bevorzugten Ausführungsbeispielen ergeben sich aus der nachfolgenden Beschreibung anhand von Zeichnungen. Es zeigt:
- Fig. 1: eine perspektivische Ansicht einer geöffneten Vorrichtung (ohne Gegenelektrode, Befestigungsvorrichtung, Abdeckung und ohne Umlenkmittel),
- Fig. 2: die Ansicht in xy-Richtung der Vorrichtung aus Fig. 1 mit Gegenelektrode und Befestigungsvorrichtung,
- Fig. 3: eine vergrößerte Darstellung des Bereichs Elektrode - Gegenelektrode - Eintrittsöffnung mit Strömungsvektoren aus Fig. 2
- Fig. 4: die Ansicht einer zweiten Ausführungsform der Vorrichtung.

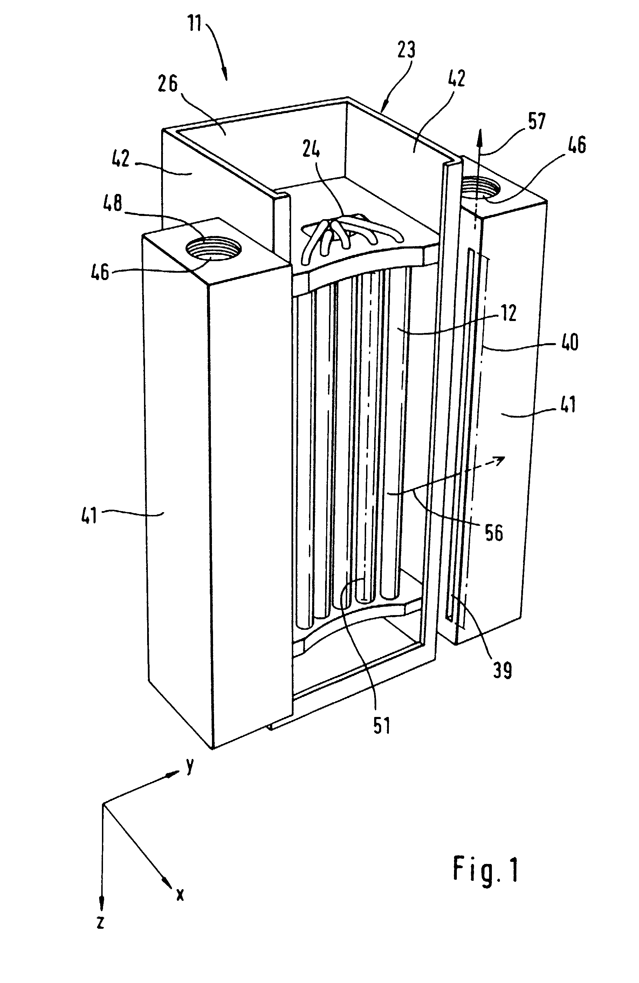

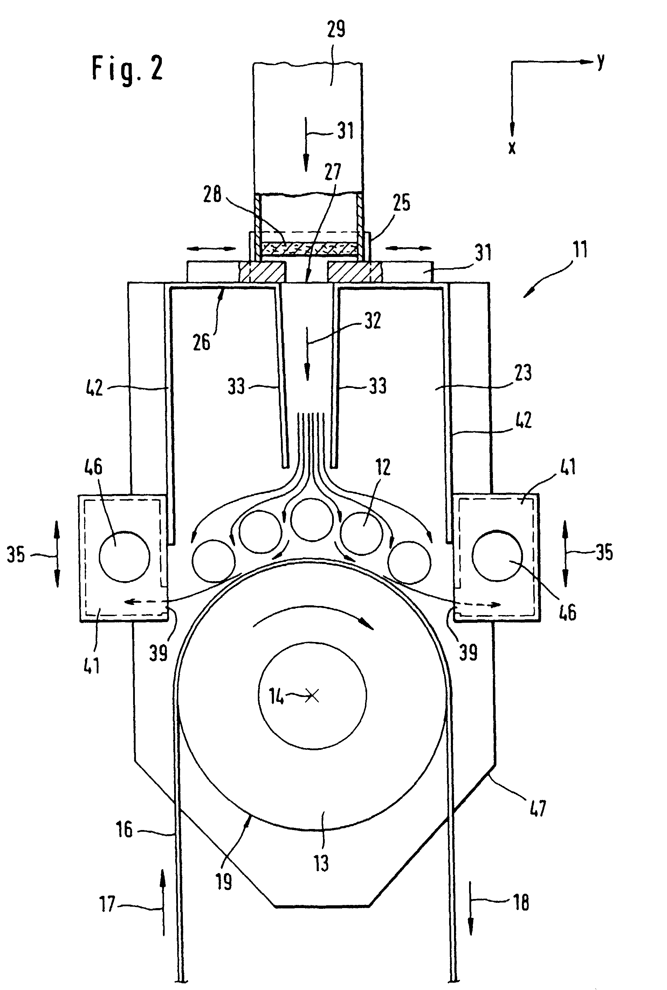

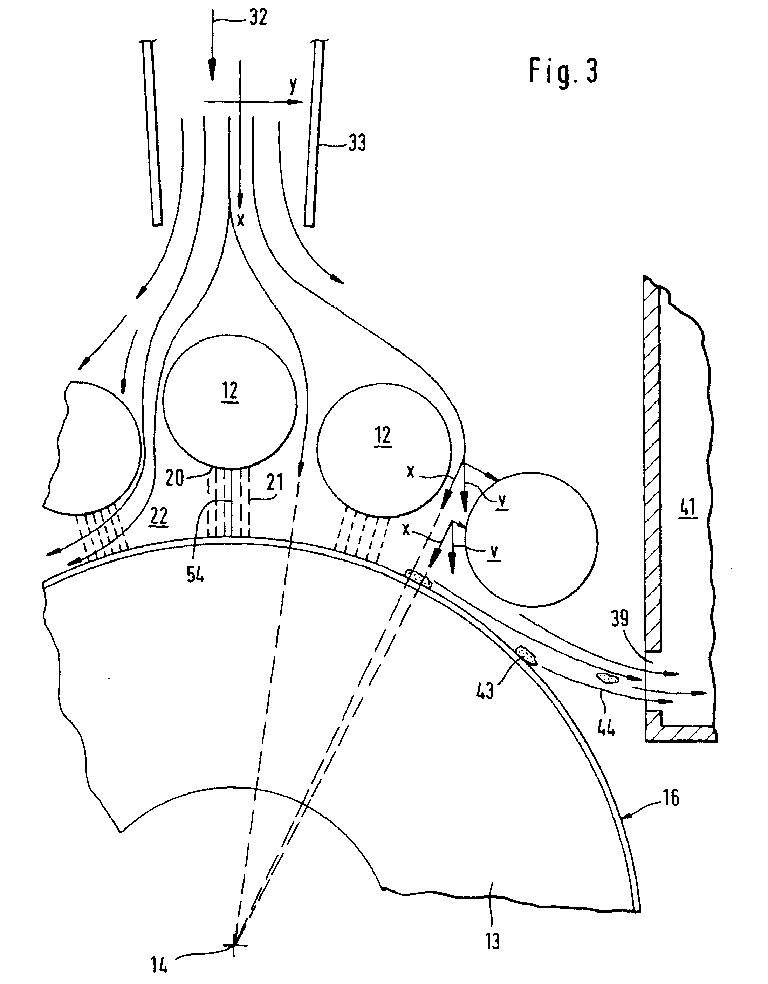

Die Figuren 1 und 2 zeigen unterschiedliche Ansichten einer Vorrichtung 11 mit fünf Elektroden 12. Die fünf Elektroden 12 sind mit Anschlußmitteln 24, die nur in Fig. 1 dargestellt sind, an einen Hochspannungsversorgungsanschluß angeschlossen. Die Gegenelektrode 13 (Fig. 2) ist walzenförmig und um die Achse 14 drehbar gelagert. Das Substrat 16 wird in Richtung der Pfeile 17, 18 durch die Drehbewegung der Gegenelektrode 13, auf deren Oberfläche 19 es anliegt, an den Elektroden 12 entlangtransportiert. Die Koronaentladung 21 findet zwischen den Elektroden 12 und der Gegenelektrode 13 im Koronaraum 22 statt (Fig. 3). Der minimale Abstand 54 zwischen der Oberfläche 19 der Gegenelektrode 13 und der Oberfläche 20 der Elektrode 12 beträgt etwa 2 mm.

Die Elektroden 12 sind im wesentlichen von einer Gehäusevorrichtung 23 umgeben, die quaderförmig ist und die Elektroden 12 und ihre Anschlußmittel 24 schützt. Dort, wo die Koronaentladung zwischen den Elektroden 12 und Gegenelektrode 13 stattfindet, ist die Gehäusevorrichtung 23 offen. Da die Gegenelektrode 13 walzenförmig ist, sind die fünf Elektroden 12 auf einem Kreisbogen angeordnet, dessen Mittelpunkt mit der Achse 14 der Gegenelektrode 13 übereinstimmt.

Auf der den Elektroden 12 gegenüberliegenden Seite 26 der Gehäusevorrichtung 23 ist der Anschluß 25 für die Hochspannungsversorgung sowie die Zuführöffnung 27 für Frischluft oder ein anderes Gas bzw. Gasgemisch vorgesehen. In der Ansicht in Fig. 2 liegt der Anschluß 25 hinter Zuführöffnung 27 und Leitung 29.

Benachbart den beiden Wänden 42 der Gehäusevorrichtung 23 sind zwei Absaugvorrichtungen 41 mit einem Spalt 39, durch den die Luft in die Absaugvorrichtung 41 eintritt. Der Spalt 39 ist bezüglich seiner Längsachse 40 im wesentlichen parallel der Längsachse 51 der Elektroden 12 ausgerichtet. In Fig. 1 erkennt man ebenfalls, daß der Spalt 39 in z-Richtung länger ist als die ebenfalls in z-Richtung gemessene Länge der Elektroden 12, wodurch eine effektive Absaugung von Ozon und Staub erzielt wird. Natürlich sollte die Länge des Spalts 39 wenigstens der Breite des Substrats entsprechen, damit die Verunreinigungen vom Substrat gut abgesaugt werden können.

Die Luft strömt durch eine Leitung 29 über Filtermittel 28 in die Zuführöffnung 27 der Gehäusevorrichtung 23 (Fig. 2). Neben der Zuführöffnung 27 der Gehäusevorrichtung 23 sind Mittel 31 vorgesehen, mittels welcher die Größe der Zuführöffnung 27 einstellbar ist. Die Mittel 31 sind in y-Richtung verschiebbar.

Um eine möglichst gleichmäßige Kühlung aller Elektroden 12 durch das Gasgemisch zu erhalten, sind in der Gehäusevorrichtung Mittel 33 in Gestalt von Luftleitblechen vorgesehen, die verhindern, daß die Luft direkt von der Zuführöffnung 27 zu den Spalten 39 der Absaugvorrichtungen strömt, ohne die Elektroden 12 hinreichend zu kühlen.

Das Gasgemisch strömt gemäß Pfeil 32 in Richtung (+x-Richtung) der Elektroden 12. Sobald die Umlenkmittel 33 die Strömung nicht mehr bündeln, weitet sich die Strömung auf und strömt an der bzw. zwischen den Elektrode(n) vorbei. Betrachtet man die Strömungsrichtung nahe einer Elektrode (bei turbulenter Strömung ggfs. im Bereich der laminaren Prandtl'schen Grenzschicht), so weist die Strömung an bzw. nahe der Elektroden eine Richtungskomponente in Richtung des Zentrums der Gegenelektrode (+x-Richtung) auf. Diese Richtungskomponenten in +x-Richtung sind in Fig. 3 für verschiedene Strömungsvektoren v dargestellt. (Bei den eingezeichneten Strömungsvektoren v wurde berücksichtigt, daß das Koordinatensystem jeweils in Richtung des Zentrums 14 der Gegenelektrode 19 auszurichten ist).

Das Gasgemisch wird durch die Eintrittsöffnungen 39 der beidseitig angeordneten Absaugvorrichtungen 41 abgesaugt.

Die Absaugvorrichtungen 41 sind in x-Richtung gemäß Pfeil 35 verschiebbar, so daß die Eintrittsöffnungen 39 auf optimale Absaugung justiert werden können.

Durch den Sog der Absaugvorrichtung 41 wird auch der sich auf dem Substrat 16 befindliche Schmutz 43 abgesaugt, wie dies ebenfalls in Fig. 3 schematisch dargestellt ist.

Die Absaugvorrichtungen 41 weisen auf ihren Oberseiten Austrittsöffnungen 46 auf, die mit einem Gewinde 48 versehen sein können und die über Leitungen nach außen führen oder auch über Filter-, Adsorptions-, Absorptions- und/oder Kühlmittel wieder zu dem Rohr 31 geführt werden, so daß ein Kreislauf bereitgestellt wird.

Die Strömungsrichtung 56 des Gasgemisches beim Eintritt in den Spalt 39 der Absaugvorrichtung 41 und die Strömungsrichtung 57 beim Austritt aus der Austrittsöffnung 46 stehen im wesentlichen zueinander senkrecht (Fig. 1). Hierdurch wird eine effektive und über die Länge des Eintrittsspalts 39 im wesentlichen konstante Absaugung erreicht.

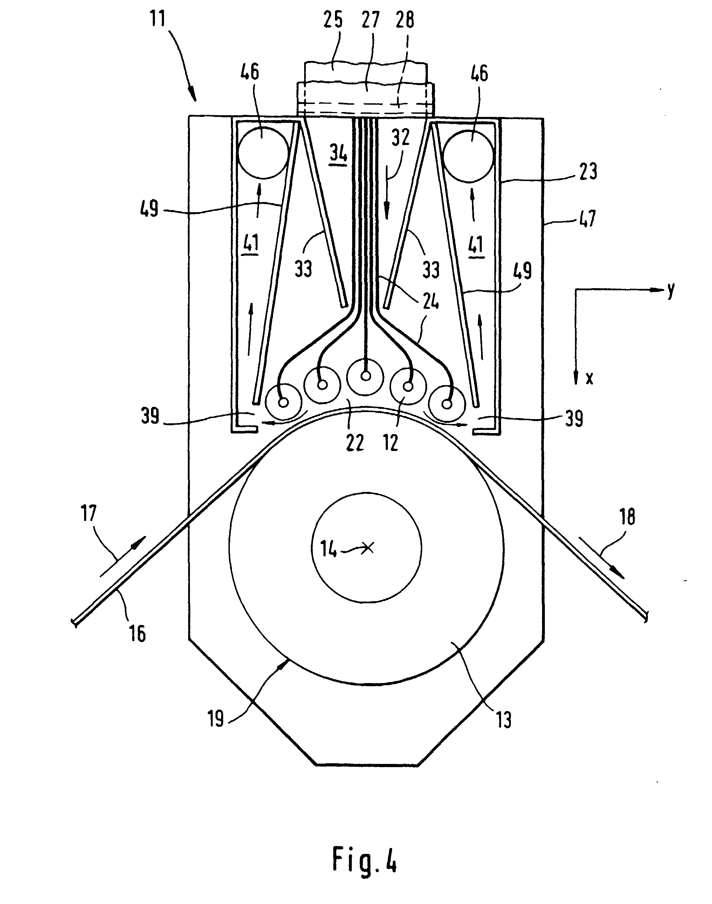

Fig. 4 zeigt wiederum eine Vorrichtung mit fünf Elektroden 12, der walzenförmigen Gegenelektrode 13, der Gehäusevorrichtung 23 mit der Zuführöffnung 27, den an der Zuführöffnung 27 angeordneten Filtermitteln 28, durch die die Luft in das Innere der Gehäusevorrichtung 23 im Bereich der Anschlußvorrichtungen 34 angesaugt wird. Der Hochspannungsanschluß 25 befindet sich hinter den Filtermitteln 28. Die Anschlußmittel 24 sind von den einzelnen Elektroden 12 durch den von den Umlenkmitteln 33 umgrenzten Raum 34 zum Hochspannungsanschluß 25 geführt. Die durch die Filtermittel 28 in den Raum 34 einströmende Luft (Pfeil 32) strömt in der in Fig. 2 und 3 dargestellten Weise zwischen den Elektroden 12 hindurch bzw. an diesen entlang. Anstelle der aus Fig. 2 - 3 bekannten Strömungsrichtung sind in Figur 4 die Anschlußmittel 24 der Elektroden 12 an den Hochspannungsanschluß 25 dargestellt. In diesem Ausführungsbeispiel ist wiederum beidseitig eine Absaugvorrichtung 41 vorgesehen, welche jedoch in den Raum der Gehäusevorrichtung 23 integriert ist. Die Absaugvorrichtungen 41 sind mit Wänden 49 gegenüber dem Raum der Gehäusevorrichtung 23, in dem sich die Anschlußmittel 24 der Elektroden 12 befinden, abgetrennt. Die beiden Absaugvorrichtungen 41 weisen seitlich des Koronaraumes 22 zwei Eintrittsöffnungen 39 auf, durch die die Luft in der bereits bekannten Weise durch die Absaugvorrichtung 41 hindurch durch die Austrittsöffnung 46 abgesaugt wird.

Wiederum steht die Eintrittsrichtung der Luft durch den Spalt 39 in die Absaugvorrichtung 41 im wesentlichen senkrecht zur Richtung des Austritts der Luft aus der Austrittsöffnung 46. Diese Ausführungsform ist von kompakterer Bauart als die in Fig. 1 dargestellte.

Prinzipiell weisen die beschriebenen Vorrichtungen zwei sich in xy-Richtung erstreckende Vorrichtungen 47 auf, die die Gehäusevorrichtung 23 einerseits abdecken und andererseits zur Befestigung dienen. Diese Vorrichtungen 47 sind in Fig. 2 und 4 dargestellt.

Natürlich ist es bei diesen Vorrichtungen möglich, den Abstand zwischen der Gegenelektrode und der bzw. den Elektroden zu variieren. Dies wird vorteilhafterweise dadurch erreicht, daß die gesamte Gehäusevorrichtung mit allen damit verbundenen Teilen, d.h. die Gehäusevorrichtung, die Elektroden mit den Anschlußmitteln sowie die Absaug- und Zuführvorrichtungen relativ zu der Gegenelektrode verschiebbar sind.

Selbstverständlich können bei der Vorrichtung zusätzlich Umlenkwalzen für das Substrat vorgesehen sein, beispielsweise um zu erreichen, daß der Spalt zwischen der Gegenelektrode 13 und der Eintrittsöffnung 39 der Absaugvorrichtung 41 nicht so groß ist, daß zuviel Raumluft in die Eintrittsöffnungen 39 der Absaugvorrichtung 41 gesaugt wird, und auch nicht zu klein.

## Patentansprüche

1. Vorrichtung zur Behandlung flächiger Substrate mit einer Koronastation, umfassend:
a) wenigstens eine über Anschlußmittel an eine Hochspannungsversorgung anschließbare Elektrode,
b) eine Gehäusevorrichtung, die die Elektrode sowie deren Anschlußmittel wenigstens teilweise aufnimmt,
c) wenigstens eine walzenförmig ausgebildete Gegenelektrode,
d) wenigstens eine Einrichtung mit wenigstens einer Zuführvorrichtung und zwei Absaugvorrichtungen zur Erzeugung einer Gasströmung, die im wesentlichen eine Richtungskomponente zur Gegenelektrode aufweist, wobei das flächige Substrat an der Gegenelektrode anliegt und aus einer Zuführrichtung in eine von der Zuführrichtung abweichenden Richtung umgelenkt und abgeführt wird,
dadurch gekennzeichnet,
daß an der Eintrittsseite des Substrats in einen zwischen der Elektrode und Gegenelektrode gebildeten Koronaraum und an der Austrittseite des Substrats aus dem Koronaraum jeweils zumindest eine Absaugvorrichtung vorgesehen ist und daß die Absaugvorrichtungen auf den Bahnverlauf des Substrats einstellbar sind.

2. Vorrichtung nach Anspruch 1, dadurch gekennzeichnet, daß die Einrichtung in der Gehäusevorrichtung im Bereich der Anschlußmittel einen Gasdruck erzeugt, der höher als der Gasdruck zwischen Elektrode und Gegenelektrode ist.

3. Vorrichtung nach Anspruch 1, dadurch gekennzeichnet, daß die Strömung im wesentlichen aus dem Bereich der Anschlußmittel der Elektrode in der Gehäusevorrichtung in Richtung der Elektrode strömt.

4. Vorrichtung nach Anspruch 3, dadurch gekennzeichnet, daß wenigstens eine Eintrittsöffnung der Absaugvorrichtung im wesentlichen seitlich des Raumes, in dem die Koronaentladungen stattfindet, angeordnet ist.

5. Vorrichtung nach Anspruch 4, dadurch gekennzeichnet, daß die Eintrittsöffnung der Absaugvorrichtung im wesentlichen parallel der Längsachse der Elektrode ausgerichtet ist.

6. Vorrichtung nach Anspruch 4, dadurch gekennzeichnet, daß die Länge der Eintrittsöffnung wenigstens der Länge der Elektrode und/oder der Breite des Substrats entspricht.

7. Vorrichtung nach einem der Ansprüche 4 bis 6, dadurch gekennzeichnet, daß die Eintrittsrichtung des Gasgemisches in die Eintrittsöffnung der Absaugvorrichtung und die Austrittsrichtung des Gasgemisches aus der Austrittsöffnung der Absaugvorrichtung im wesentlichen senkrecht zueinander stehen.

8. Vorrichtung nach Anspruch 4, dadurch gekennzeichnet, daß die Größe und/oder der Ort der Eintrittsöffnung wenigstens teilweise einstellbar sind.

9. Vorrichtung nach Anspruch 1, dadurch gekennzeichnet, daß zwei Absaugvorrichtungen vorgesehen sind, die vorzugsweise spiegelbildlich gleiche Gestalt haben.

10. Vorrichtung nach Anspruch 1, dadurch gekennzeichnet, daß die Gehäusevorrichtung eine Zuführvorrichtung für Gase, Luft oder Gasgemische aufweist, welche Zuführvorrichtung eine in die Gehäusevorrichtung führende Eintrittsöffnung aufweist.

11. Vorrichtung nach Anspruch 10, dadurch gekennzeichnet, daß die Zuführvorrichtung und/oder die Gehäusevorrichtung Filtermittel aufweist.

12. Vorrichtung nach Anspruch 10, dadurch gekennzeichnet, daß die Größe der Zuführöffnung einstellbar ist.

13. Vorrichtung nach Anspruch 10, dadurch gekennzeichnet, daß die Zuführvorrichtung eine Vorrichtungen zur Erzeugung von Gasströmung umfaßt.

14. Vorrichtung nach Anspruch 1, dadurch gekennzeichnet, daß in der Gehäusevorrichtung Mittel zum Lenken der Gasströmung vorgesehen sind.

15. Vorrichtung nach Anspruch 1, dadurch gekennzeichnet, daß in der Absaugvorrichtung Mittel zum Lenken der Gasströmung vorgesehen sind.

16. Vorrichtung nach Anspruch 15, dadurch gekennzeichnet, daß die Mittel zum Lenken der Gasströmung als Luftführungsleitbleche ausgebildet sind.

17. Vorrichtung nach Anspruch 1, dadurch gekennzeichnet, daß die Hochspannung wenigstens 2 kV beträgt.

18. Vorrichtung nach Anspruch 1, dadurch gekennzeichnet, daß der minimale Abstand Elektrode / Gegenelektrode höchstens 5 mm beträgt.

19. Vorrichtung nach Anspruch 1, dadurch gekennzeichnet, daß sie explosionsgeschützt ist.

20. Vorrichtung nach Anspruch 1, dadurch gekennzeichnet, daß der Gasstrom einen Kreislauf bildet.

21. Vorrichtung nach Anspruch 20, dadurch gekennzeichnet, daß in dem Kreislauf Filtermittel und/oder eine Kühlung vorgesehen sind.

22. Vorrichtung nach Anspruch 1, dadurch gekennzeichnet, daß wenigstens zwei Elektroden und eine Gegenelektrode vorgesehen sind.

23. Vorrichtung nach Anspruch 1, dadurch gekennzeichnet, daß die Gegenelektrode drehbar ist.

24. Vorrichtung nach Anspruch 1, dadurch gekennzeichnet, daß die Gegenelektrode auf der den Elektroden zugewandten Seite im wesentlichen eben ist.

25. Vorrichtung nach Anspruch 1, dadurch gekennzeichnet, daß zusätzlich lönisatoren und/oder Bürsten und/oder Absaug- und/oder Blasvorrichtungen vorgesehen sind.

## Revendications

1. Dispositif de traitement de substrats plats avec une station à décharge corona, comprenant :
a) au moins une électrode pouvant être raccordée à une alimentation haute tension par l'intermédiaire d'un moyen de branchement.
b) un dispositif boîtier qui renferme au moins en partie l'électrode ainsi que son moyen de branchement,
c) au moins une contre-électrode en forme de rouleau,
d) au moins un mécanisme comprenant au moins un dispositif d'arrivée et deux dispositifs d'aspiration pour produire un écoulement de gaz, lequel présente pour l'essentiel une composante de direction vers la contre-électrode, le substrat plat reposant contre la contre-électrode et étant retourné d'un sens d'arrivée en un sens opposé au sens d'arrivée puis évacué,
caractérisé par le fait
qu'au moins un dispositif d'aspiration est prévu à la fois du côté de l'entrée du substrat dans une chambre à décharge corona formée entre l'électrode et la contre-électrode et du côté de la sortie du substrat de la chambre à décharge corona et que les dispositifs d'aspiration sont réglables en fonction de l'évolution de la trajectoire du substrat.

2. Dispositif selon la revendication 1, caractérisé par le fait que le mécanisme dans le dispositif boîtier produit une pression de gaz dans la zone du moyen de branchement, ladite pression étant supérieure à la pression du gaz entre l'électrode et la contre-électrode.

3. Dispositif selon la revendication 1, caractérisé par le fait que l'écoulement se produit essentiellement depuis la zone du moyen de branchement de l'électrode dans le dispositif boîtier en direction de l'électrode.

4. Dispositif selon la revendication 3, caractérisé par le fait qu'au moins un orifice d'entrée du dispositif d'aspiration est disposé pour l'essentiel latéralement par rapport à la chambre dans laquelle se produisent les décharges corona.

5. Dispositif selon la revendication 4, caractérisé par le fait que l'orifice d'entrée du dispositif d'aspiration est pour l'essentiel aligné parallèlement à l'axe longitudinal de l'électrode.

6. Dispositif selon la revendication 4, caractérisé par le fait que la longueur de l'orifice d'entrée correspond pour l'essentiel à la longueur de l'électrode et/ou à la largeur du substrat.

7. Dispositif selon l'une des revendications 4 à 6, caractérisé par le fait que le sens d'entrée du mélange gazeux du dispositif d'aspiration et le sens de sortie du mélange gazeux hors de l'orifice de sortie du dispositif d'aspiration sont pour l'essentiel perpendiculaires l'un par rapport à l'autre.

8. Dispositif selon la revendication 4, caractérisé par le fait que la grandeur et/ou l'emplacement de l'orifice d'entrée sont au moins en partie réglables.

9. Dispositif selon la revendication 1, caractérisé par le fait que sont prévus deux dispositifs d'aspiration qui présentent de préférence la même configuration mais en miroir.

10. Dispositif selon la revendication 1, caractérisé par le fait que le dispositif boîtier présente un dispositif d'arrivée pour des gaz, de l'air ou des mélanges gazeux, ledit dispositif d'arrivée présentant un orifice d'entrée menant dans le dispositif boîtier.

11. Dispositif selon la revendication 10, caractérisé par le fait que le dispositif d'arrivée et/ou le dispositif boîtier présente un moyen de filtrage.

12. Dispositif selon la revendication 10, caractérisé par le fait que la grandeur de l'orifice d'arrivée est réglable.

13. Dispositif selon la revendication 10, caractérisé par le fait que le dispositif d'arrivée comprend un dispositif pour produire un écoulement de gaz.

14. Dispositif selon la revendication 1, caractérisé par le fait que des moyens de diriger l'écoulement de gaz sont prévus dans le dispositif boîtier.

15. Dispositif selon la revendication 1, caractérisé par le fait que des moyens de diriger l'écoulement de gaz sont prévus dans le dispositif d'aspiration.

16. Dispositif selon la revendication 15, caractérisé par le fait que les moyens de diriger l'écoulement de gaz sont réalisés sous la forme de tôles de déflexion d'air.

17. Dispositif selon la revendication 1, caractérisé par le fait que la haute tension est au moins égale à 2 kV.

18. Dispositif selon la revendication 1, caractérisé par le fait que l'écart minimal entre l'électrode et la contre-électrode est de 5 mm.

19. Dispositif selon la revendication 1, caractérisé par le fait qu'il est antidéflagrant.

20. Dispositif selon la revendication 1, caractérisé par le fait que l'écoulement de gaz forme un circuit fermé.

21. Dispositif selon la revendication 20, caractérisé par le fait que des moyens de filtrage et/ou un dispositif de refroidissement sont prévus dans le circuit fermé.

22. Dispositif selon la revendication 1, caractérisé par le fait que sont prévues au moins deux électrodes et une contre-électrode.

23. Dispositif selon la revendication 1, caractérisé par le fait que la contre-électrode et pivotante.

24. Dispositif selon la revendication 1, caractérisé par le fait que le côté de la contre-électrode qui est dirigé vers l'électrode est essentiellement plan.

25. Dispositif selon la revendication 1, caractérisé par le fait que des ionisateurs et/ou des brosses et/ou des dispositifs d'aspiration et/ou des dispositifs de soufflage supplémentaires sont prévus.

## Claims

1. Apparatus for processing flat substrates by means of a corona station, comprising:
a) at least one electrode which can be connected to a high-voltage supply via connecting means,
b) a housing device which at least partly accommodates the electrode and its connecting means,
c) at least one counter-electrode of roller-shaped construction,
d) at least one device having at least one feed unit and two extraction units for producing a gas flow which essentially has a directional component for the counter-electrode, the flat substrate bearing against the counter-electrode and being deflected from a feed direction into a direction deviating from the feed direction and being led away,
characterized in that in each case at least one extraction unit is provided on the inlet side of the substrate into a corona space formed between the electrode and counter-electrode, and on the outlet side of the substrate from the corona space, and in that the extraction units can be adjusted onto the path of the web of the substrate.

2. Apparatus according to Claim 1, characterized in that the device produces in the housing device in the region of the connecting means a gas pressure which is higher than the gas pressure between electrode and counter-electrode.

3. Apparatus according to Claim 1, characterized in that the stream flows essentially from the region of the connecting means of the electrode in the housing device in the direction of the electrode.

4. Apparatus according to Claim 3, characterized in that at least one inlet opening of the extraction unit is essentially arranged to the side of the space in which the corona discharges occur.

5. Apparatus according to Claim 4, characterized in that the inlet opening of the extraction unit is aligned essentially parallel to the longitudinal axis of the electrode.

6. Apparatus according to Claim 4, characterized in that the length of the inlet opening corresponds at least to the length of the electrode and/or the width of the substrate.

7. Apparatus according to one of Claims 4 to 6, characterized in that the direction of inlet of the gas mixture into the inlet opening of the extraction unit and the direction of outlet of the gas mixture from the outlet opening of the extraction unit are essentially perpendicular to one another.

8. Apparatus according to Claim 4, characterized in that the size and/or location of the inlet opening is at least partly adjustable.

9. Apparatus according to Claim 1, characterized in that two extraction units are provided which preferably are of identical mirror-image configuration.

10. Apparatus according to Claim 1, characterized in that the housing device has a feed unit for gases, air or gas mixtures, which feed unit has an inlet opening leading into the housing device.

11. Apparatus according to Claim 10, characterized in that the feed unit and/or the housing device has filter means.

12. Apparatus according to Claim 10, characterized in that the size of the feed opening is adjustable.

13. Apparatus according to Claim 10, characterized in that the feed unit comprises a device for producing a gas flow.

14. Apparatus according to Claim 1, characterized in that means for directing the gas flow are provided in the housing device.

15. Apparatus according to Claim 1, characterized in that means for directing the gas flow are provided in the extraction unit.

16. Apparatus according to Claim 15, characterized in that the means for directing the gas flow are constructed as air-guiding baffles.

17. Apparatus according to Claim 1, characterized in that the high voltage is at least 2 kV.

18. Apparatus according to Claim 1, characterized in that the minimum electrode/counter-electrode spacing is at most 5 mm.

19. Apparatus according to Claim 1, characterized in that it is explosion-protected.

20. Apparatus according to Claim 1, characterized in that the gas flow forms a circuit.

21. Apparatus according to Claim 20, characterized in that filter means and/or a cooler are provided in the circuit.

22. Apparatus according to Claim 1, characterized in that at least two electrodes and one counter-electrode are provided.

23. Apparatus according to Claim 1, characterized in that the counter-electrode is rotatable.

24. Apparatus according to Claim 1, characterized in that the counter-electrode is essentially level on the side facing the electrodes.

25. Apparatus according to Claim 1, characterized in that ionizers and/or brushes and/or extraction and/or blowing units are additionally provided.
